# EUROPÄISCHE PATENTSCHRIFT

(11) **EP 2 618 032 B1**
(45) Veröffentlichungstag und Bekanntmachung des Hinweises auf die Patenterteilung: **23.05.2018**
(21) Anmeldenummer: 13000228.0
(22) Anmeldetag: 17.01.2013
(51) Int. Cl.: F16J 15/3208, F16J 15/3232, F16J 15/324, F16J 15/3244, F16J 15/3228

(54) **Wellendichtung, insbesondere Radialwellendichtung**
Shaft seal, in particular a radial shaft seal
Joint d'étanchéité d'arbre, notamment joint d'arbre radial

(30) Priorität: 19.01.2012 DE 102012001226
(43) Veröffentlichungstag der Anmeldung: 24.07.2013
(73) Patentinhaber: Kaco GmbH & Co. KG, 74072 Heilbronn (DE)
(72) Erfinder: Hoffmann, Tobias, 74388 Talheim (DE); Podeswa, Matthias, 71717 Beilstein (DE)
(74) Vertreter: Kohl, Karl-Heinz

(56) Entgegenhaltungen:
- EP-A1- 0 031 231
- EP-A2- 0 218 394
- DE-A1- 2 606 127
- DE-A1-102008 010 338
- JP-A- 2009 197 883
- JP-U- H0 271 172
- JP-U- H0 344 268
- US-A- 3 099 454

## Beschreibung

Die Erfindung betrifft eine Wellendichtung, insbesondere eine Radialwellendichtung, nach dem Oberbegriff des Anspruches 1.

Bei Wellendichtungen in Form von Radialwellendichtungen werden als Werkstoff für die Dichtelemente Polyfluorcarbon, insbesondere Polytetrafluorethylen, wegen ihrer besonderen physikalischen und chemischen Eigenschaften eingesetzt. Diese Dichtelemente sind als Ringscheiben ausgebildet, deren radial innerer Bereich zur Bildung der Dichtlippe elastisch gebogen ist. Bei Polyfluorcarbonen, insbesondere bei Polytetrafluorethylen, ist ein Kriechen zu beobachten. Zudem haben diese Materialien eine verhältnismäßig geringe mechanische Festigkeit. Das Kriechen dieses Werkstoffes führt dazu, dass die Dichtwirkung nachlässt. Um dieser Kriechwirkung zu begegnen, wird darum die radiale Vorspannung, die auf die Dichtlippe wirkt, erhöht. Dies führt aber zu einem entsprechend stärkeren Verschleiß der Dichtlippe. Bei Dichtungsanwendungen ist es darum schwierig, eine Balance zwischen Dichtheit und Verschleiß zu finden.

Um diese Balance zu erreichen, ist es bekannt, dem Dichtelement unterschiedliche Füllstoffe zuzusetzen, beispielsweise Glasfasern, Kohlefasern, Bronze und dergleichen. Diese Zusätze bedingen jedoch eine aufwändige und teure Herstellung.

Bei einer bekannten Wellendichtung (US 3 099 454 A) sitzt die Laufhülse unter Zwischenlage eines Elastomerteiles auf der abzudichtenden Welle. Die beiden Dichtelemente liegen mit Dichtlippen unter der Kraft eines Elastomerelementes dichtend an der Außenseite der Laufhülse an. Die Laufhülse, die Dichtelemente sowie das Elastomerelement sind in ein zweiteiliges Gehäuse eingekapselt. Dadurch ist die Abfuhr der beim Einsatz der Wellendichtung auftretenden Wärme beeinträchtigt, so dass mit einem frühzeitigen Verschleiß zu rechnen ist.

Bei einer anderen bekannten Wellendichtung (EP 0 031 231 A) wird das Elastomerelement durch einen Haltering gehalten, der unter Zwischenlage einer Unterlegscheibe an einem radial verlaufenden Teil des Elastomerelementes anliegt. Die Sicherung der Dichtteile wird durch den Haltering erreicht, der axial gegen die Unterlegscheibe und gegen den radialen Abschnitt des Elastomerelementes gedrückt wird.

Bei einer weiteren bekannten Wellendichtung (DE 26 06 127 A1) liegt das Dichtelement mit seiner Dichtlippe unter der Kraft eines Elastomerelementes unmittelbar auf der abzudichtenden Welle auf. Das Dichtelement ist zwischen einem Radialflansch einer Klemmhülse und einem Radialflansch eines Stützkörpers axial eingespannt.

Es ist weiter eine Lagerdichtung bekannt (JP 2009 197883 A), die ein Dichtelement aufweist, das an einem im Querschnitt etwa L-förmigen Stützkörper befestigt ist. Das Dichtelement hat zwei entgegengesetzt schräg zueinander sich erstreckende Dichtlippen, die an einem im Querschnitt L-förmigen Schleuderring anliegen.

Es ist weiter bekannt (EP 0 218 394 A2), eine Wellendichtung so auszubilden, dass ein Dichtelement unter der Kraft eines Elastomerelementes mit seiner Dichtlippe unmittelbar an der abzudichtenden Welle anliegt. Das Dichtelement wird zwischen einem Radialflansch des Gehäuses und einer Klemmhülse axial geklemmt.

Auch bei der Wellendichtung gemäß der JP H02 71172 U liegt das Dichtelement mit seiner Dichtlippe unter der Kraft eines Elastomerelementes unmittelbar an der abzudichtenden Welle an.

Die Wellendichtung gemäß JP HO3 44268 U hat ein Dichtelement, deren Dichtlippe unter der Kraft eines Elastomerelementes dichtend unmittelbar auf der abzudichtenden Welle aufliegt.

Es ist schließlich eine Wellendichtung bekannt (DE 10 2008 010 338 A1), bei der das Dichtelement dichtend an der Mantelfläche einer Laufhülse anliegt und zwischen einem Elastomerelement und einem ringscheibenförmigen Abstützelement axial eingeklemmt ist. Das Abstützelement ist an einen radial nach außen.ragenden Flansch des Gehäuses der Wellendichtung angeschweißt.

Der Erfindung liegt die Aufgabe zugrunde, die gattungsgemäße Wellendichtung so auszubilden, dass deren Dichtheit bei konstruktiv einfacher und kostengünstiger Herstellung während ihrer Einsatzdauer im Wesentlichen beibehalten bleibt.

Diese Aufgabe wird bei der gattungsgemäßen Wellendichtung erfindungsgemäß mit den kennzeichnenden Merkmalen des Anspruches 1 gelöst.

Bei der erfindungsgemäßen Wellendichtung wird die Dichtlippe des Dichtelementes durch das Elastomerelement in Richtung auf das abzudichtende Bauteil belastet. Dadurch ist gewährleistet, dass die Dichtlippe stets mit ausreichender Kraft an der abzudichtenden Fläche anliegt, die die Mantelfläche der Laufhülse ist, die im eingebauten Zustand mit Presssitz auf der Welle/Achse sitzt. Sollte das Material des Dichtelementes kriechen, hat dies keinen Einfluss auf die radiale Anpresskraft der Dichtlippe, weil das Elastomerelement dafür sorgt, dass die Dichtlippe stets mit ausreichender Anpresskraft auf der abzudichtenden Fläche aufliegt. Das Elastomerelement ist zwischen dem Dichtelement und dem Ringflansch des Gehäuses sicher gehalten. Das Dichtelement ist innerhalb des Gehäuses zuverlässig lagegesichert, da das Dichtelement an wenigstens einem Abstützelement anliegt. In diesem Fall liegt das Dichtelement zwischen dem Elastomerelement und dem Abstützelement, so dass es zwischen beiden Elementen sicher gehalten werden kann.

Das Abstützelement wird durch eine Ringscheibe gebildet. Sie nimmt nur wenig Raum in Anspruch, so dass die Wellendichtung kompakt ausgebildet werden kann. Zudem trägt die ringscheibenförmige Gestaltung des Abstützelementes zu einer einfachen und kostengünstigen Herstellung der Wellendichtung bei.

Das Abstützelement ist mit seinem radial äußeren Rand am Gehäuse durch Anschweißen befestigt, so dass das Abstützelement seine Einbaulage nicht verändert, so dass das Dichtelement während der Laufdauer der Wellendichtung seine Dichtfunktion zuverlässig ausführen kann.

Die erfindungsgemäße Wellendichtung, die vorzugsweise eine Radialwellendichtung ist, ist hervorragend für den Einsatz im Automobilbau geeignet. So kann die erfindungsgemäße Wellendichtung beispielsweise bei Kühlmittelpumpen von Kraftfahrzeugen eingesetzt werden. Die erfindungsgemäße Wellendichtung kann in einem Druckbereich von beispielsweise etwa 10 mbar bis etwa 3.500 mbar eingesetzt werden. Als Kühlmittel kommen beispielsweise OAT, SOAT, SOAT mit Glyzerin, aber auch reines Wasser in Betracht, für welche die Wellendichtung eingesetzt werden kann. Die erfindungsgemäße Wellendichtung kann in einem Temperaturbereich von etwa - 30°C bis etwa 125°C problemlos eingesetzt werden. Aufgrund der erfindungsgemäßen Ausbildung hat die Wellendichtung ein hervorragendes Leckageverhalten, das einen Wert von wesentlich weniger als 3g/100h beträgt. Die Wellendichtung zeichnet sich außerdem durch ihr sehr gutes Geräuschverhalten während des Einsatzes aus, was u. a. auf den Einsatz des Elastomerteiles zurückzuführen ist, das schwingungsdämpfend wirkt.

Vorteilhaft stützt das Elastomerelement das Dichtelement ab.

Das Dichtelement liegt bei einer bevorzugten Ausführungsform an der von der Mediumsseite abgewandten Seite des Elastomerelementes flächig an. Das Dichtelement wird somit durch das Elastomerelement geschützt. Außerdem wird dadurch eine hohe Schwingungsdämpfung erreicht.

Damit die Dichtlippe des Dichtelementes einfach und zuverlässig gegen die abzudichtende Fläche gedrückt werden kann, ist es vorteilhaft, wenn das Elastomerelement mit einem lippenartigen Teil auf der Dichtlippe des Dichtelementes unter radialer Kraft aufliegt. Die lippenförmige Gestaltung dieses Teils des Elastomerelementes erlaubt eine optimale Kraftübertragung. Die lippenförmige Ausbildung erlaubt es, dass dieser Teil des Elastomerelementes optimal elastisch gebogen werden kann, so dass eine ausreichende Vorspannkraft zur Verfügung steht.

Das Elastomerelement kann so ausgebildet sein, dass die Radialkraft nur durch den lippenartigen Teil auf die Dichtlippe ausgeübt wird. Bei einer bevorzugten Ausführungsform wird der lippenartige Teil des Elastomerelementes durch wenigstens eine Feder in Radialrichtung belastet. Diese Feder ist vorteilhaft eine Ringfeder, mit der der lippenartige Teil über seinen Umfang umgriffen wird. Mit der Feder ist sichergestellt, dass jederzeit eine ausreichend hohe Radialkraft auf die Dichtlippe des Dichtelementes ausgeübt wird.

Das Dichtelement ist vorteilhaft eine Ringscheibe, die wenig Raum in Anspruch nimmt und zu einer vorteilhaften und kostengünstigen Herstellung der Wellendichtung beiträgt.

Eine zuverlässige Abstützung des Dichtelementes ergibt sich, wenn das Abstützelement am radial verlaufenden Teil des Dichtelementes sowie am Übergang vom radial verlaufenden Teil in die Dichtlippe des Dichtelementes anliegt.

Eine optimale Abdichtung ergibt sich, wenn zwei Dichtelemente axial nebeneinander vorgesehen sind, die mit einer Seite an jeweils einem Abstützelement anliegen.

In diesem Falle ist es vorteilhaft, wenn die Dichtelemente mit ihrer anderen Seite an einem Elastomerelement anliegen.

Das Elastomerelement weist vorteilhaft eine drehrichtungsabhängige oder -unabhängige Struktur bzw. Geometrie zum Dichtelement auf. Dann erfolgt eine Rückförderung des abzudichtenden Mediums entweder nur in einer Drehrichtung oder auch in beiden Drehrichtungen.

Bei einer vorteilhaften Ausbildung weist auch die Dichtlippe eine drehrichtungsabhängige oder -unabhängige Struktur bzw. Geometrie auf. Dann kann je nach Einsatzfall das abzudichtende Medium auch mit Hilfe der Struktur bzw. Geometrie der Dichtlippe in einer Drehrichtung und drehrichtungsunabhängig zurückfördern.

Diese Struktur bzw. Geometrie kann an der Laufseite und/oder an der Außenseite der Dichtlippe vorgesehen sein.

Die Mantelfläche der Laufhülse ist vorteilhaft profiliert. Diese Profilierung kann bei einer vorteilhaften Ausbildung wellenförmig ausgebildet sein. Zwischen der Profilierung der Laufhülse und der aufliegenden Dichtlippe können auf diese Weise Schmiertaschen gebildet werden, die eine zuverlässige Schmierung der auf der Laufhülse aufliegenden Dichtlippe gewährleisten.

Die Laufhülse kann bei einer anderen vorteilhaften Ausbildung auch punktförmige Vertiefungen an ihrer Außenseite aufweisen. Sie können ebenfalls vorteilhaft als Schmiertaschen verwendet werden.

Bei einer besonders vorteilhaften Ausgestaltung ist die Profilierung der Laufhülse als Drallstruktur ausgebildet, mit der eine Rückförderung des Mediums in Richtung auf die Mediumsseite erreicht wird. Diese Drallstruktur kann vorteilhaft so ausgebildet sein, dass sie nur in einer Drehrichtung der Welle oder auch in beiden Drehrichtungen der Welle wirksam ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird nachstehend anhand einiger in den Zeichnungen dargestellter Ausführungsformen näher erläutert. Es zeigen
- Fig. 1 bis Fig. 4: jeweils eine Hälfte einer Laufhülse einer erfindungsgemäßen Wellendichtung,
- Fig. 5 bis Fig. 7: jeweils im Axialschnitt verschiedene Ausführungsformen von nicht erfindungsgemäßen Wellendichtungen,
- Fig. 6 a und 7a: jeweils in vergrößerter Darstellung die Verteilung der Anpresskraft eines Elastomerteiles der erfindungsgemäßen Wellendichtung im Bereich der Anlage an einer Dichtlippe eines Dichtelementes,
- Fig. 10: jeweils im Axialschnitt eine Hälfte verschiedener Ausführungsbeispiele von erfindungsgemäßen Wellendichtungen.

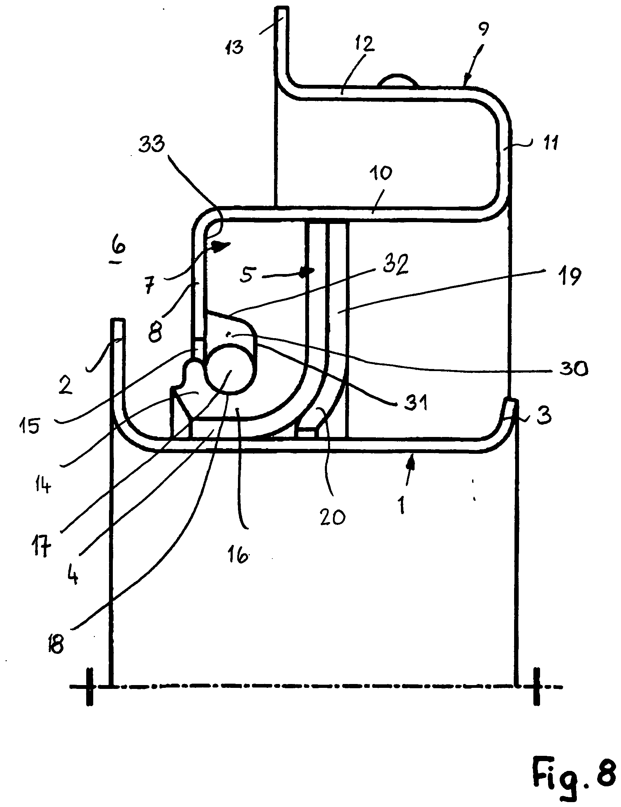

Der Gesamtaufbau einer Wellendichtung, die bevorzugt eine Radialwellendichtung ist, wird anhand von Fig. 8 erläutert. Die Wellendichtung hat eine Laufhülse 1, die drehfest auf der abzudichtenden (nicht dargestellten) Welle sitzt. Die Laufhülse 1 sitzt mit Presssitz auf der abzudichtenden Welle. An einem Ende hat die Laufhülse 1 einen radial nach außen gerichteten Flansch 2. Das andere Ende 3 der Laufhülse 1 kann trichterförmig aufgeweitet sein. Die radiale Breite des Ringflansches 2 ist größer als die radiale Breite des aufgeweiteten Endes 3. Auf der zylinderförmigen Außenseite der Laufhülse 1 liegt eine Dichtlippe 4 eines Dichtelementes 5 unter radialer Vorspannung dichtend an. Das Dichtelement 5 ist vorteilhaft eine Dichtscheibe, deren radial innen liegender Bereich zur Bildung der Dichtlippe 4 elastisch gebogen ist. Das Dichtelement 5 besteht aus einem Polyfluorcarbon, vorzugsweise aus Polytetrafluorethylen. Die Dichtlippe 4 ist in Richtung auf die Mediumsseite 6 elastisch gebogen.

An der der Mediumsseite 6 zugewandten Seite ist das Dichtelement 5 von einem Elastomerelement 7 abgedeckt. Es liegt über die gesamte radiale Breite am Dichtelement 5 an. Das Elastomerelement 7 besteht aus elastischem Kunststoff oder gummiähnlichem Material.

Das Elastomerelement 7 liegt axial an einem radial nach innen gerichteten Ringflansch 8 eines Gehäuses 9 an. Der Ringflansch 8 geht in einen inneren Zylinderteil 10 über, der an seinem vom Ringflansch 8 abgewandten Ende über einen radial nach außen verlaufenden Ringflansch 11 in einen äußeren Zylinderteil 12 übergeht. Sein freies Ende geht in einen radial nach außen gerichteten Ringflansch 13 über. Mit ihm liegt das Gehäuse 9 in der Einbaulage der Wellendichtung in bekannter Weise an einer eine Aufnahmeöffnung für die Wellendichtung aufweisenden Seite eines Aggregates an. Das Gehäuse 9 ist vorteilhaft einstückig ausgebildet und besteht vorteilhaft aus metallischem Material. Je nach Einsatzgebiet der Wellendichtung kann das Gehäuse 9 auch aus hartem Kunststoff bestehen.

Der radial nach innen gerichtete Ringflansch 8 übergreift, in Achsrichtung der Wellendichtung gesehen, den Ringflansch 2 der Laufhülse 1, der Abstand vom Ringflansch 8 hat. Das Elastomerelement 7 ragt mit seinem freien Ende 14 in eine zentrale Öffnung 15 des Ringflansches 8. Im dargestellten Ausführungsbeispiel ragt das freie Ende 14 geringfügig über den Ringflansch 8 in Richtung auf den Ringflansch 2 vor. Zwischen dem freien Ende 14 des Elastomerelementes 7 und dem Rand der Öffnung 15 sowie dem Ringflansch 2 besteht ein kleiner Abstand.

Der auf der Dichtlippe 4 aufliegende Teil 16 des Elastomerelementes 7 ist nach Art einer Dichtlippe ausgebildet. Er liegt über die gesamte Breite der Dichtlippe 4 an und übt auf die Dichtlippe 4 eine Radialkraft aus. Die Dichtlippe 4 wird auf diese Weise zuverlässig gegen die Außenseite der Laufhülse 1 gedrückt, so dass das abzudichtende Medium zuverlässig zurückgehalten wird. Um eine optimale radiale Anpresskraft zu erreichen, wird der Dichtlippenteil 16 des Elastomerelementes 7 durch eine Ringfeder 17 belastet, die in einer Ringnut 18 in der Außenseite des Dichtlippenteiles 16 vorgesehen ist. Die Wand der Ringnut 18 umgibt die Ringfeder 17 über etwa 180°, so dass sie zuverlässig in der Einbaulage gehalten wird. Die Ringfeder 17 sorgt dafür, dass die Dichtlippe 4 des Dichtelementes 5 stets mit ausreichender Radialkraft an der Außenseite der Laufhülse 1 anliegt. Die Ringfeder 17 befindet sich innerhalb des Gehäuses 9.

Die Ringfeder 17 liegt in einem Aufnahmeraum 30 des Elastomerteiles 7. Er wird an seiner einen Stirnseite teilweise vom Ringflansch 8 des Gehäuses 9 begrenzt. An der axial gegenüberliegenden Seite wird der Aufnahmeraum 30 durch eine Seitenwand 31 begrenzt, die tangential zur Ringfeder 17 in die Wandung der Ringnut 18 übergeht. Die Seitenwand 31 liegt parallel zum Ringflansch 8 des Gehäuses 9 und geht über eine radial schräg nach außen verlaufende Wand 32 in eine Stirnseite 33 über, mit der das Elastomerteil 7 flächig an der Innenseite des Ringflansches 8 anliegt.

An der vom Elastomerelement 7 abgewandten Seite des Dichtelementes 5 liegt eine Abstützscheibe 19 an. Sie erstreckt sich radial bis zum Zylinderteil 10 des Gehäuses 9, an dem die Abstützscheibe 19 vorteilhaft befestigt ist. Besteht die Abstützscheibe 19 aus metallischem Werkstoff, dann ist sie erfindungsgemäß an den Zylinderteil angeschweißt. Die Abstützscheibe 19 liegt mit ihrem radial inneren Bereich 20 flächig am Übergangsbereich des Dichtelementes 5 in die Dichtlippe 4 an.

Das Dichtelement 5 ist in der beschriebenen Weise zwischen dem Elastomerelement 7 und der Abstützscheibe 19 angeordnet und liegt an ihnen jeweils an.

Die Abstützscheibe 19 und/oder das Elastomerelement 7 können mit dem Dichtelement 5 chemisch und/oder mechanisch verbunden sein.

Die Abstützscheibe 19 fixiert die Einzelteile 7, 5 der Wellendichtung in Verbindung mit dem Ringflansch 8 des Gehäuses 9. Die Ringfeder 17 sorgt dafür, dass auch bei einem eventuellen Kriechen des Dichtelementes 5 die Dichtlippe 4 unter der notwendigen Vorspannkraft auf der Laufhülse 1 aufliegt.

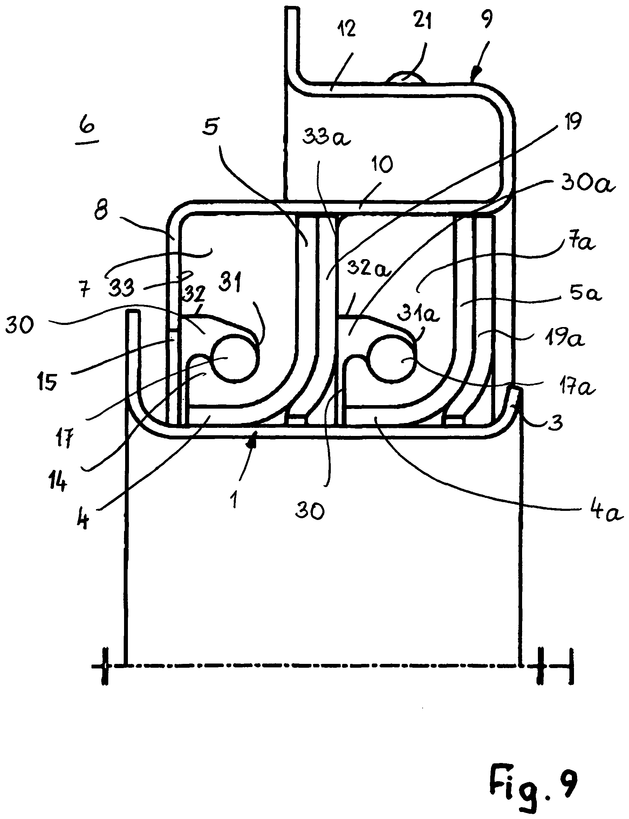

Das Ausführungsbeispiel gemäß Fig. 9 unterscheidet sich von dem beschriebenen Ausführungsbeispiel dadurch, dass das Dichtelement, das Elastomerelement und die Abstützscheibe doppelt vorhanden sind. Da die Wellendichtung infolge der doppelten Anordnung in Axialrichtung breiter ist, ist dementsprechend auch der Zylinderteil 10 des Gehäuses 9 breiter als beim vorigen Ausführungsbeispiel. Das Elastomerelement 7 ist wiederum zwischen dem Ringflansch 8 des Gehäuses 9 und dem Dichtelement 5 vorgesehen. Es liegt mit der Dichtlippe 4 auf der Außenseite der Laufhülse 1 auf. Das zweite Elastomerelement 7a liegt zwischen der Abstützscheibe 19 und dem Dichtelement 5a. Das Dichtelement 5a selbst ist zwischen dem Elastomerelement 7a und der Abstützscheibe 19a angeordnet. Zumindest die Abstützscheibe 19a ist mit ihrem äußeren Rand an der Innenseite des Zylinderteils 10 des Gehäuses 9 befestigt, wie anhand des vorigen Ausführungsbeispieles beschrieben worden ist. Die Dichtelemente 5, 5a, die Elastomerelemente 7, 7a und die Abstützscheiben 19, 19a können miteinander chemisch und/oder mechanisch verbunden sein. Die Dichtelemente 5, 5a, die Elastomerelemente 7, 7a und die Abstützscheiben 19, 19a sind gleichsinnig hintereinander angeordnet. Infolge dieser doppelten Anordnung ergibt sich eine zuverlässige Abdichtung des auf der Mediumsseite 6 sich befindenden Mediums.

Wie beim vorigen Ausführungsbeispiel befindet sich auf der Außenseite des Zylinderteils 12 des Gehäuses 9 das Dichtmittel 21, das eine statische Abdichtung in der Einbaulage der Wellendichtung bildet. Das Dichtmittel 21, das sich über den Umfang des Zylinderteils 12 erstreckt, wird in der Einbaulage der Wellendichtung elastisch verformt und sorgt somit für eine zuverlässige statische Abdichtung. Die beiden Ringfedern 17, 17a drücken die Dichtlippen 4, 4a fest gegen die Laufhülse 1. Aufgrund der Vorspannung der Ringfedern 17, 17a ist die Abdichtung auch dann gewährleistet, wenn das Dichtelement 5 geringfügig kriechen sollte.

Das trichterförmig erweiterte Ende 3 der Laufhülse 1 trägt zu einer besseren Zentrierung bei der Montage der Wellendichtung bei und kann als Transportsicherung sowie auch zur Kapselung einer Vorschmierung gegen Verschleppung und Verunreinigung dienen.

Das freie Ende 14 des Elastomerelementes 7 ragt im Unterschied zur vorigen Ausführungsform nicht in die Öffnung 15 des Ringflansches 8. Dadurch ist es möglich, für die Ausbildung der Wellendichtung nach Fig. 9 zwei gleiche Elastomerelemente 7, 7a zu verwenden.

Der Aufnahmeraum 30, 30a der Elastomerteile 7, 7a hat eine größere axiale Erstreckung als der Aufnahmeraum 30 der Wellendichtung nach Fig. 8. Die Seitenwand 31, 31a hat größeren Abstand von der Stirnseite 33, 33a des Elastomerteiles 7, 7a. Die an die Seitenwand 31, 31a anschließende Wand 32, 32a ist in Axialrichtung wesentlich länger als bei der vorigen Ausführungsform. Dafür ist der Aufnahmeraum 30, 30a in Radialrichtung kleiner als der Aufnahmeraum 30 gemäß Fig. 8.

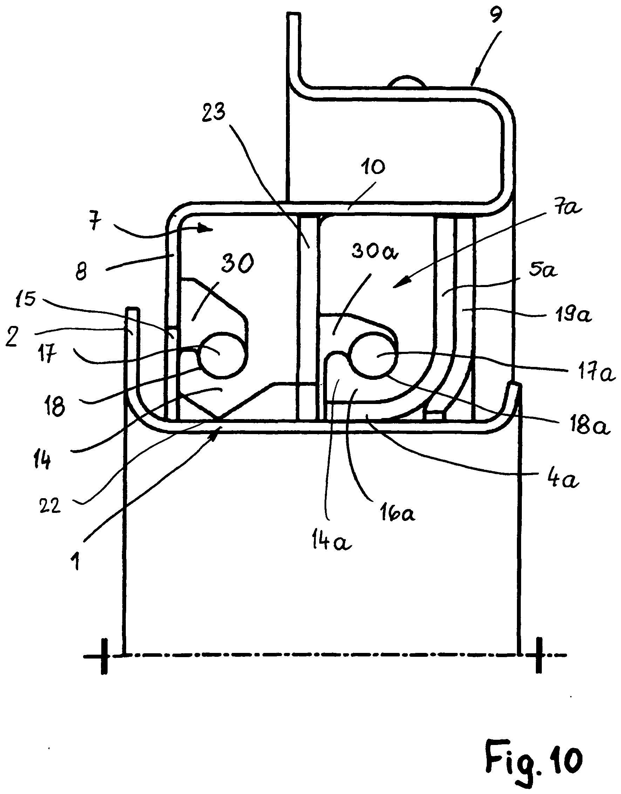

Die Wellendichtung nach Fig. 10 hat das Elastomerelement 7, das mit seiner Dichtlippe 14 auf der Außenseite der Laufhülse 1 aufliegt. Die Dichtlippe 14 hat eine Dichtkante 22, mit der sie auf der Laufhülse 1 aufliegt. Die Dichtkante 22 liegt unter radialer Vorspannung auf der Laufhülse 1 auf. Zur Unterstützung der radialen Vorspannung ist die Ringfeder 17 vorgesehen, die in die Ringnut 18 des Elastomerelementes 7 eingelegt ist. Der Aufnahmeraum 30 des Elastomerteils 7 ist im Wesentlichen gleich ausgebildet wie bei der Wellendichtung nach Fig. 8. Der Aufnahmeraum 30 nach Fig. 10 ist allerdings in Radialrichtung höher als bei der Ausführungsform nach Fig. 8. Das Elastomerelement 7 bildet bei dieser Ausführungsform eines der beiden Dichtelemente. Das Elastomerelement 7 stützt sich am Ringflansch 8 des Gehäuses 9 sowie an einer Abstützscheibe 23 ab, die in einer Radialebene liegt und mit Abstand die Laufhülse 1 umgibt. Die Abstützscheibe 23 ist mit ihrem äußeren Rand an der Innenseite des Zylinderteils 10 des Gehäuses 9 durch Anschweißen befestigt, wenn sie aus metallischem Werkstoff besteht. Das Elastomerelement 7 liegt mit seiner dem Elastomerelement 7a zugewandten Seite flächig an der Abstützscheibe 23 an, deren radiale Breite der entsprechenden radialen Breite der Anlageseite des Elastomerelementes 7 entspricht. Das freie Ende der Dichtlippe 14 ragt im Ausführungsbeispiel nicht in die zentrale Öffnung 15 des Ringflansches 8. Selbstverständlich kann jedoch die Dichtlippe 14 so ausgebildet sein, dass sie, ähnlich wie beim Ausführungsbeispiel nach Fig. 8, in oder sogar durch die zentrale Öffnung 15 ragt. Dabei liegt dieses freie Ende noch mit ausreichendem Abstand zum Ringflansch 2 der Laufhülse 1.

Das Dichtelement 5a ist gleich ausgebildet wie bei den Ausführungsbeispielen nach den Fig. 8 und 9. Es hat die Dichtlippe 4a, die unter radialer Vorspannung auf der Laufhülse 1 aufliegt. Das Dichtelement 5a wird zwischen dem Elastomerelement 7a und der Abdeckscheibe 19a gehalten, die entsprechend den vorigen Ausführungsbeispielen ausgebildet ist. Das Elastomerelement 7a liegt zwischen den beiden Abstützscheiben 22 und 19a, an denen sie mit ihren beiden Seiten flächig anliegt. Das freie Ende 14a des Elastomerelementes 7a hat axialen Abstand von der Abstützscheibe 23. Die Ringfeder 17a, die in die Ringnut 18a des Elastomerelementes 7a eingelegt ist, übt eine radiale Vorspannkraft auf die Dichtlippe 4a des Dichtelementes 5a aus. Der dichtlippenähnliche Teil 16a des Elastomerelementes 7 bedeckt die Dichtlippe 4a entsprechend den vorigen Ausführungsbeispielen auf ihrer von der Laufhülse 1 abgewandten Rückseite. Der Aufnahmeraum 30a ist entsprechend dem Aufnahmeraum 30a der Fig. 9 ausgebildet.

Die Abstützscheibe 19a hat wie bei der Ausführungsform nach Fig. 9 axialen Abstand vom trichterförmigen Ende 3 der Laufhülse 1. Die Abstützscheibe 19a ist an der Innenseite des Zylinderteils 10 des Gehäuses 9 in der beschriebenen Weise befestigt.

Wie das Ausführungsbeispiel nach Fig. 10 beispielhaft zeigt, kann die Wellendichtung unterschiedlich gestaltete Dichtelemente aufweisen. In diesem Falle ist das eine Dichtelement das aus elastomerem Material bestehende Elastomerelement 7, während das andere Dichtelement 5a aus Polyfluorcarbon, vorzugsweise aus Polytetraflorethylen, besteht.

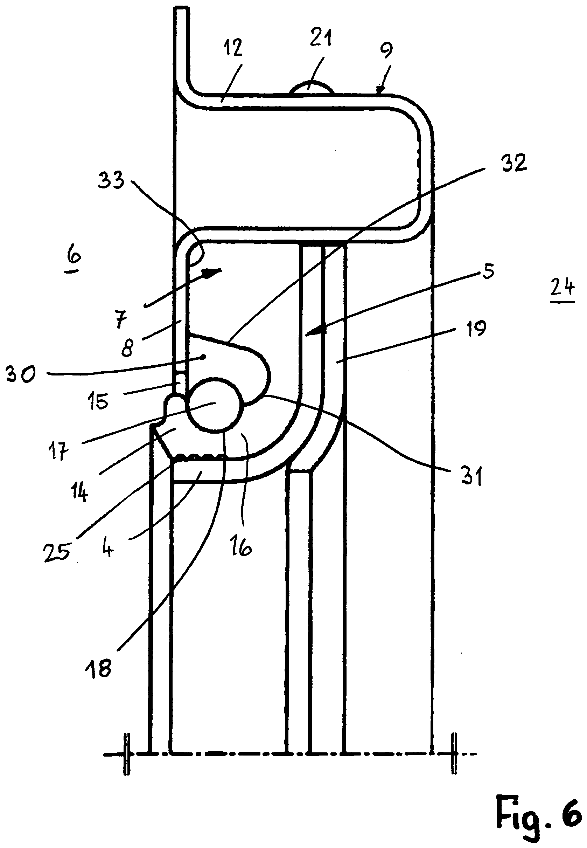

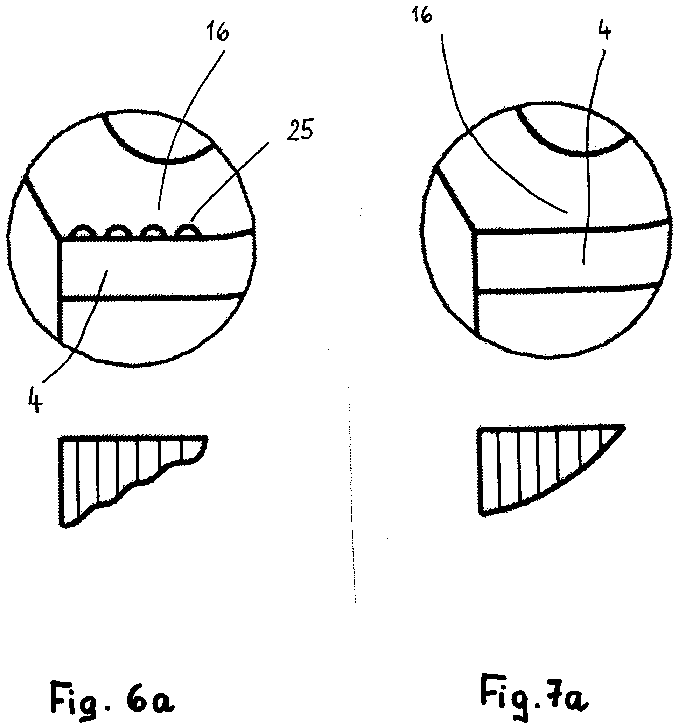

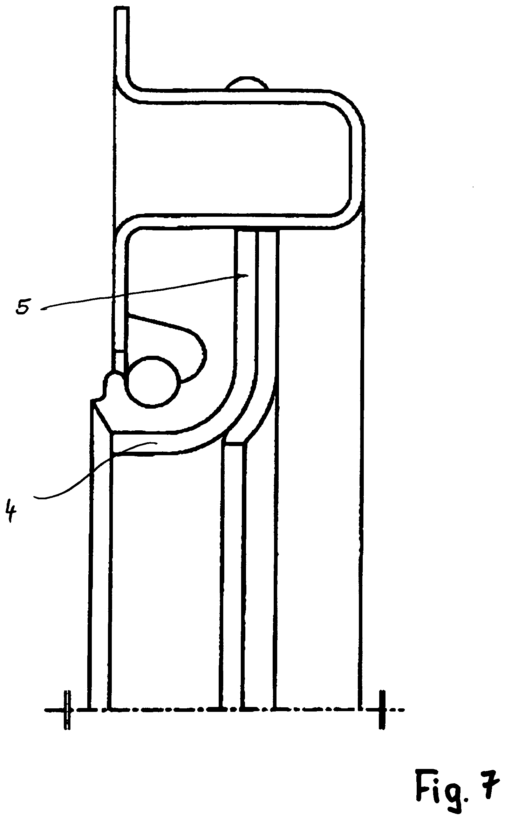

Die Fig. 6 und 7 zeigen Wellendichtungen ohne Laufhülse. Bei diesen Ausführungsbeispielen liegt die Dichtlippe 4 des Dichtelementes 5 unmittelbar auf der (nicht dargestellten) Welle auf. Das Dichtelement 5 liegt zwischen dem Elastomerelement 7 und der Abstützscheibe 19, die entsprechend der Ausführungsform gemäß Fig. 8 ausgebildet und angeordnet sind. Das freie Ende 14 des dichtlippenförmigen Teils 16 des Elastomerelementes 7 ragt durch die zentrale Öffnung 15 des Ringflansches 8 des Gehäuses 9. Auf dem Zylinderteil 12 des Gehäuses 9 befindet sich das Dichtmittel 21, mit dem die statische Abdichtung vorgenommen wird.

Da die Wellendichtung nach Fig. 6 keine Laufhülse hat, zeichnet sie sich durch einen einfachen konstruktiven Aufbau aus. Die Ringfeder 17 sorgt für den ausreichenden radialen Anpressdruck der Dichtlippe 4 auf der abzudichtenden Welle. Wie bei den vorigen Ausführungsbeispielen ist die Dichtlippe 4 des Dichtelementes 5 in Richtung auf die Mediumsseite 6 gebogen. Die Abstützscheibe 19 liegt entsprechend den vorigen Ausführungsbeispielen an der der Luftseite 24 zugewandten Seite des Dichtelementes 5 an.

Der Aufnahmeraum 30 hat die Seitenwand 31, die im Unterschied zu den bisher beschriebenen Ausführungsbeispielen nicht tangential, sondern radial an die Wandung der Ringnut 18 anschließt. Die Seitenwand 31 geht dann bogenförmig gekrümmt in die Wand 32 über, die ihrerseits stumpfwinklig an die Stirnseite 33 des Elastomerteils 7 anschließt. Aufgrund des radialen Anschlusses der Seitenwand 31 an die Wand der Ringnut 18 übt das im Aufnahmeraum 30 befindliche Medium einen Radialdruck auf den dichtlippenförmigen Teil 16 des Elastomerteils 7 und damit auf die Dichtlippe 4 des Dichtelementes 5 aus. Dadurch kann die Anpressung der Dichtlippe 4 durch eine entsprechende hydraulische Unterstützung über das Elastomerteil 7 erreicht werden. Durch eine entsprechende Gestaltung des Aufnahmeraumes 30 lässt sich somit zusätzlich die Anpresskraft der Dichtlippe 4 einstellen.

Bei dieser Ausführungsform kann die Presskraftverteilung somit durch ein Zusammenspiel der Gestaltung der Profilierung 25 und des Aufnahmeraumes 30 an den Einsatzfall der Wellendichtung hervorragend angepasst werden.

Das Elastomerelement 7 weist im Bereich der Dichtlippe 4 des Dichtelementes 5 auf seiner Auflageseite eine Profilierung 25 auf. Diese Profilierung ist beispielhaft im Axialschnitt wellenförmig gestaltet. Die zwischen benachbarten Vertiefungen der Profilierung 25 bestehenden Stege werden durch den von der Ringfeder 17 ausgeübten radialen Druck elastisch verformt. Die Profilierung 25 des dichtlippenförmigen Teils 16 des Elastomerelementes 7 ergibt eine besondere Kraftverteilung, wie sich aus Fig. 6a ergibt. Hier ist die Kraftverteilung über die axiale Breite der Profilierung 25 dargestellt. Aufgrund der Stege der Profilierung 25 lässt sich der Verlauf der Kraftverteilung beeinflussen. Die Kraftverteilung erfolgt nicht kontinuierlich über die axiale Breite der Profilierung, sondern im Bereich der Stege zwischen den Vertiefungen der Profilierung diskontinuierlich. Somit kann der Verlauf der radialen Anpresskraft der Dichtlippe 4 auf der Welle oder auf der Laufhülse 1 durch entsprechende Gestaltung der Profilierung 25 beeinflusst werden. Die radiale Anpresskraft nimmt vom freien Ende der Dichtlippe 4 aus ab.

Die Dichtlippe 4 bzw. das gesamte Dichtelement 5 hat nur eine sehr geringe Dicke, so dass diese die durch die Profilierung 25 wie in Fig. 6a erzeugte Kraftverteilung zeigt.

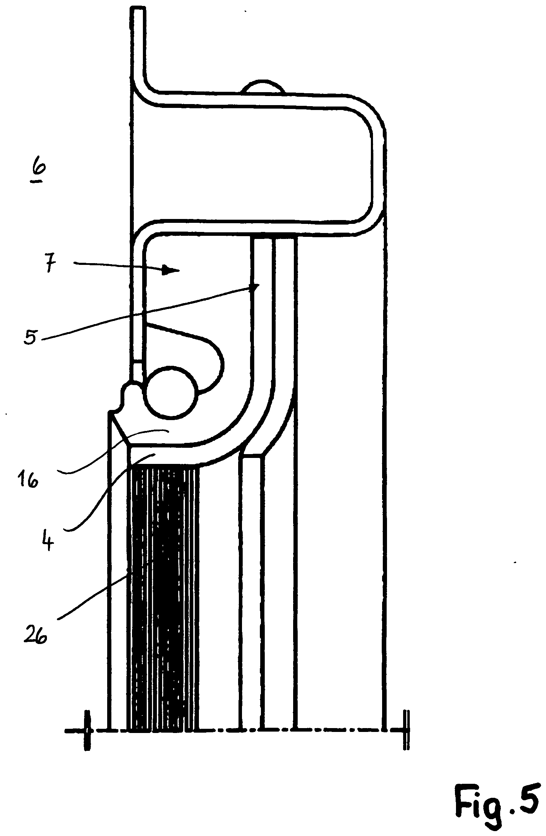

Das Ausführungsbeispiel gemäß Fig. 5 unterscheidet sich von der Wellendichtung nach Fig. 6 dadurch, dass der Teil 16 des Elastomerelementes 7 keine Profilierung aufweist und dass dafür die Dichtlippe 4 des Dichtelementes 5 auf ihrer der abzudichtenden Welle zugewandten Seite mit einer Rückfördereinrichtung 26 versehen ist. Sie sorgt dafür, dass zwischen die Dichtlippe 4 und die Welle gelangendes Medium zurück zur Mediumsseite 6 gefördert wird. Die Rückfördereinrichtung 26 kann so ausgebildet sein, dass sie nur in einer Drehrichtung der Welle die Rückförderwirkung erzeugt. Es ist aber auch möglich, die Rückfördereinrichtung 26 so zu gestalten, dass eine Rückförderung des Mediums in beiden Drehrichtungen der Welle möglich ist. Da beide Arten von Rückfördereinrichtungen bekannt sind, werden sie nicht im Einzelnen beschrieben. Im Übrigen ist die Wellendichtung nach Fig. 5 gleich ausgebildet wie das Ausführungsbeispiel nach Fig. 6.

Die Dichtlippe 4 kann auch an ihrer Außenseite eine solche Rückfördereinrichtung aufweisen. Schließlich kann die Rückfördereinrichtung nur an der Außenseite der Dichtlippe 4 vorgesehen sein.

Die Ausführungsform nach Fig. 7 entspricht im Wesentlichen dem Ausführungsbeispiel nach Fig. 5. Der einzige Unterschied besteht darin, dass die Dichtlippe 4 des Dichtelementes 5 an ihrer Wellenauflageseite keine Rückfördereinrichtung aufweist. Das Ausführungsbeispiel unterscheidet sich außerdem gegenüber der Ausführungsform nach Fig. 6 nur dadurch, dass eine Profilierung im Bereich 16 des Elastomerteiles 7 nicht vorgesehen ist. Wie aus Fig. 7a hervorgeht, hat dies zur Folge, dass sich im Unterschied zum Ausführungsbeispiel nach Fig. 6, 6a eine kontinuierliche radiale Anpresskraftverteilung über die axiale Breite der Dichtlippe 4 ergibt. Die Anpresskraft nimmt vom freien Ende der Dichtlippe 4 aus stetig ab.

Ein Vergleich der Fig. 6, 6a und 7, 7a zeigt, dass durch entsprechende Gestaltung des Bereiches 16 des Elastomerteiles 7 die Kraftverteilung auf den jeweiligen Anwendungsfall optimal eingestellt werden kann.

Die Pressungsverteilung kann drehrichtungsabhängig oder -unabhängig erfolgen.

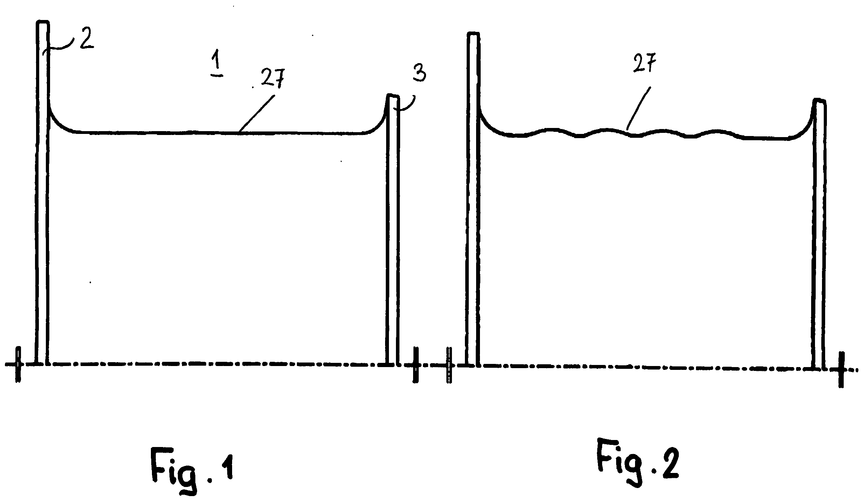

Die Fig. 1 bis 4 zeigen unterschiedliche Ausbildungen der Laufhülse 1. Beim Ausführungsbeispiel nach Fig. 1 hat die Laufhülse 1 einen zylindrischen Mantel 27, der am einen Ende in den Ringflansch 2 und am anderen Ende in das trichterförmig erweiterte Ende 3 übergeht.

Bei der Ausführungsform gemäß Fig. 2 hat der Mantel 27 ein wellenförmiges Profil, das vorteilhaft über die gesamte axiale Länge des Mantels 27 vorgesehen ist. Diese Wellenprofilierung ist vorteilhaft gleichmäßig gestaltet, das heißt die Wellen haben gleiche Tiefe und gleiche axiale Breite. Eine solche Gestaltung der Profilierung ist allerdings nicht zwingend. Die Wellen können auch ungleichmäßig ausgebildet und/oder nur über einen Teil der axialen Länge des Mantels 27 vorgesehen sein. Die Wellenprofilierung kann als Schmiermitteldepot verwendet werden, so dass die Dichtlippe 4 stets geschmiert wird und dadurch nur einem geringen Verschleiß ausgesetzt ist.

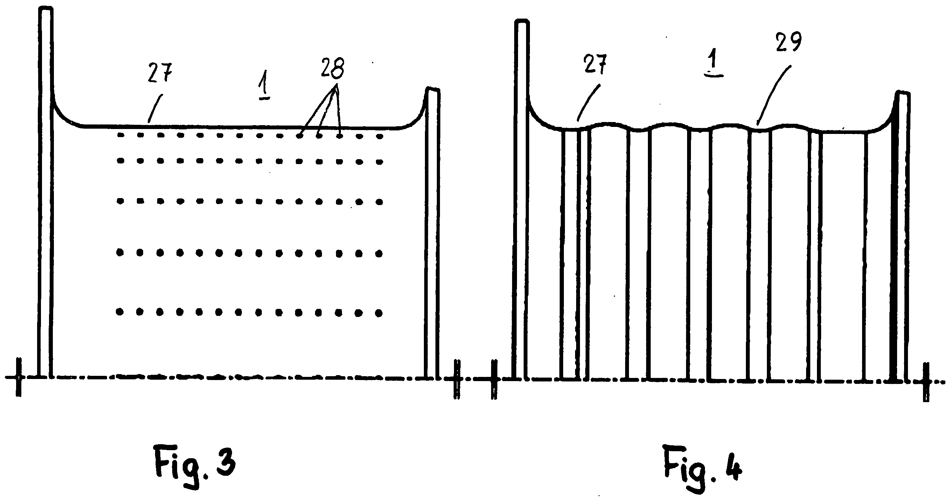

Der Mantel 27 der Laufhülse 1 gemäß Fig. 3 kann an der Außenseite mit einer Profilierung 28 in Form von punktförmigen Vertiefungen versehen sein. Sie dienen vorteilhaft als Schmiertaschen, durch die eine zuverlässige Schmierung der auf der Laufhülse 1 aufliegenden Dichtlippe 4 gewährleistet ist.

Fig. 4 zeigt eine Ausführungsform, bei der der Mantel 27 der Laufhülse 1 mit einer Drallstruktur 29 versehen ist, durch die ebenfalls eine Rückförderung von Medium in Richtung auf die Mediumsseite 6 erreicht wird. Die Drallstruktur 29 kann so ausgebildet sein, dass sie nur in einer Drehrichtung der Welle wirksam ist. Es ist aber auch möglich, diese Drallstruktur 29 so zu gestalten, dass eine drehrichtungsunabhängige Rückförderung des abzudichtenden Mediums gewährleistet ist. Die Drallstruktur 29 erstreckt sich vorteilhaft etwa über die gesamte axiale Länge des Mantels 27.

Die anhand der verschiedenen Ausführungsbeispiele beschriebenen Komponenten der Wellendichtung können in unterschiedlichsten Konstellationen zusammen eingesetzt werden. Darum sind die dargestellten Ausführungsbeispiele nicht beschränkend zu verstehen. So können die Laufhülsen 1 gemäß den Fig. 1 bis 4 an jedem der beschriebenen Wellendichtungs-Ausführungen vorgesehen werden.

Die Elastomerelemente 7 können auch ohne Ringfedern 17 eingesetzt werden. In diesen Fällen wird die durch den Teil 16 des Elastomerelementes 7 ausgeübte Radialkraft dazu verwendet, die Dichtlippe 4 des Dichtelementes 5 gegen die Laufhülse 1 oder direkt gegen die abzudichtende Welle zu drücken. Das Elastomerelement 7 ist in diesen Fällen so gestaltet, dass ihr Bereich 16 diese radiale Vorspannkraft erzeugt.

Die Dichtlippe 4 des Dichtelementes 5 ist in den dargestellten Ausführungsformen stets in Richtung auf die Mediumsseite 6 gebogen. Es ist aber auch möglich, die Dichtlippe 4 in Richtung auf die Luftseite 24 zu biegen.

Werden zwei nebeneinander liegende Dichtelemente 5 eingesetzt, dann können die Dichtlippen 4, 4a beider Dichtelemente 5, 5a auch in Richtung auf die Luftseite 24 gerichtet sein. Ebenso ist es möglich, dass die eine Dichtlippe in Richtung auf die Mediumsseite 6 und die andere Dichtlippe in Richtung auf die Luftseite 24 gerichtet ist. In welcher Richtung die Dichtlippe 4 verläuft, hängt vom Einsatzfall der Wellendichtung ab.

Auch das Elastomerelement 7 kann unterschiedlich gestaltet sein, wie sich beispielsweise aus den Fig. 9 und 10 ergibt. Bei der Ausführungsform gemäß Fig. 10 kann anstelle des Elastomerelementes 7 mit der Dichtkante 22 auch ein Elastomerelement 7 eingesetzt werden, wie es beispielsweise in Fig. 9 dargestellt ist. In diesem Falle liegt der Teil 16 des Elastomerelementes 7 auf der Laufhülse 1 auf. In diesem Falle kann der Bereich 16 des Elastomerelementes 7 auf seiner Auflageseite mit einer Drallstruktur versehen sein, die ein Zurückfördern des Mediums auf die Mediumsseite 6 gewährleistet. Eine solche Drallstruktur kann wiederum so ausgebildet sein, dass sie nur in einer Drehrichtung der Laufhülse 1 bzw. der Welle oder in beiden Drehrichtungen wirksam ist.

Die Drallstrukturen in der Dichtlippe 4, 4a des Dichtelementes 5, 5a und/oder im Bereich 16 des Elastomerelementes 7 können geprägt, gedreht, geschliffen, gelasert, gespritzt und dergleichen sein. Die Drallstruktur kann nicht nur am Drallelement 5 und/oder am Elastomerelement 7 vorgesehen sein, sondern auch an der Gegenlauffläche, das heißt am Mantel 27 der Laufhülse 1 oder an der abzudichtenden Welle.

Die Laufhülsen 1 gemäß den Fig. 1 bis 4, insbesondere die profilierten Laufhülsen entsprechend den Fig. 2 bis 4, können auch bei Wellendichtungen eingesetzt werden, die eine herkömmliche Gestaltung haben. Der Einsatz der Laufhülsen 1 ist somit nicht auf die beschriebenen Wellendichtungen beschränkt.

## Patentansprüche

1. Wellendichtung, insbesondere Radialwellendichtung, mit wenigstens einer Laufhülse (1), einem Gehäuse (9) sowie mit einem Dichtelement (5, 5a) aus Polyfluorcarbon, vorzugsweise aus Polytetrafluorethylen, das mit einer Dichtlippe (4, 4a) versehen ist, die an einer abzudichtenden Fläche unter radialer Kraft anliegt und durch wenigstens ein Elastomerelement (7, 7a), das axial zwischen einem radial nach innen gerichteten Ringflansch (8) des Gehäuses (9) und dem Dichtelement (5, 5a) angeordnet ist, in Richtung auf die abzudichtende Fläche (27) belastet ist, die die Mantelfläche (27) der Laufhülse (1) ist, die an einem Ende einen radial nach außen gerichteten Flansch (2) aufweist und die im eingebauten Zustand drehfest auf einer Welle/Achse sitzt,
**dadurch gekennzeichnet, dass** die Laufhülse (1) im eingebauten Zustand mit Presssitz auf der Welle/Achse sitzt, dass das Elastomerelement /7, 7a) am radial nach innen gerichteten Ringflansch (8) des Gehäuses (9) und am Dichtelement (5, 5a) anliegt, dass das Dichtelement (5, 5a) an seiner vom Elastomerelement (7, 7a) abgewandten Seite an wenigstens einem Abstützelement (19, 19a, 23) anliegt, das eine radial sich erstreckende Ringscheibe ist, die mit ihrem radial äußeren Rand an einem Zylinderteil (10) des Gehäuses (9) durch Anschweißen befestigt ist, und dass der Flansch (2) der Laufhülse (1) außerhalb des Gehäuses (1) liegt und axialen Abstand vom Ringflansch (8) des Gehäuses (9) hat.

2. Wellendichtung nach Anspruch 1,
**dadurch gekennzeichnet, dass** das Elastomerelement (7, 7a) das Dichtelement (5, 5a) abstützt, das vorteilhaft an der von der Mediumsseite (6) abgewandten Seite des Elastomerelementes (7, 7a) flächig anliegt.

3. Wellendichtung nach Anspruch 1 oder 2,
**dadurch gekennzeichnet, dass** das Elastomerelement (7, 7a) mit einem vorteilhaft durch wenigstens eine Feder (17, 17a) in Radialrichtung belasteten lippenartigen Teil (16, 16a) auf der Dichtlippe (4, 4a) des Dichtelementes (5, 5a) unter radialer Kraft aufliegt.

4. Wellendichtung nach einem der Ansprüche 1 bis 3,
**dadurch gekennzeichnet, dass** das Abstützelement (19, 19a) am radial verlaufenden Teil des Dichtelementes (5, 5a) sowie am Übergang vom radial verlaufenden Teil in die Dichtlippe (4, 4a) anliegt.

5. Wellendichtung nach einem der Ansprüche 1 bis 4,
**dadurch gekennzeichnet, dass** zwei Dichtelemente (5, 5a) axial nebeneinander vorgesehen sind, die mit einer Seite an jeweils einem Abstützelement (19, 19a, 23) anliegen.

6. Wellendichtung nach Anspruch 5,
**dadurch gekennzeichnet, dass** die Dichtelemente (5, 5a) mit ihrer anderen Seite an einem Elastomerelement (7, 7a) anliegen.

7. Wellendichtung nach einem der Ansprüche 1 bis 6,
**dadurch gekennzeichnet, dass** das Elastomerelement (7, 7a) eine drehrichtungsabhängige oder -unabhängige Struktur bzw. Geometrie (25) zum Dichtelement (5, 5a) aufweist.

8. Wellendichtung nach einem der Ansprüche 1 bis 7,
**dadurch gekennzeichnet, dass** die Dichtlippe (4, 4a) eine drehrichtungsabhängige oder -unabhängige Struktur bzw. Geometrie (26) aufweist.

9. Wellendichtung nach Anspruch 8,
**dadurch gekennzeichnet, dass** die Struktur bzw. Geometrie (26) an der Laufseite und/oder der Außenseite der Dichtlippe (4, 4a) vorgesehen ist.

10. Wellendichtung nach einem der Ansprüche 1 bis 9,
**dadurch gekennzeichnet, dass** die Mantelfläche (27) der Laufhülse (1) profiliert ist.

## Claims

1. A shaft seal, in particular a radial shaft seal, with at least one running sleeve (1), a housing (9) as well as a sealing element (5, 5a) from polyfluorcarbon, preferably from polytetrafluorethylene, which is provided with a sealing lip (4, 4a) which by radial force is in contact with a surface to be sealed and subjected to a load in direction of the surface to be sealed (27) by an elastomer element (7, 7a) arranged axially between a radially inwardly directed annular flange (8) of the housing (9) and the sealing element (5, 5a), the surface to be sealed (27) being the shell surface (27) of the running sleeve (1) which at one end comprises a radially outwardly directed flange (2) and which when installed is non-rotatably seated on a shaft/axle,
**characterised in that** the running sleeve (1) when installed, is seated on the shaft/axle in the manner of a press-fit, that the elastomer element (7, 7a) is in contact with the radially inwardly directed annular flange (8) of the housing (9) and the sealing element (5, 5a), that the sealing element (5, 5a) is in contact, on its side facing away from the elastomer element (7, 7a) with at least one supporting element (19, 19a, 23) which is a radially extending annular disc, which with its radially outer rim is fastened by welding on a cylinder part (10) of the housing (9), and **in that** the flange (2) of the running sleeve (1) lies outside the housing (9) and is at an axial distance from the annular flange (8) of the housing (9) .

2. The shaft seal according to claim 1, **characterised in that** the elastomer element (7, 7a) supports the sealing element (5, 5a), which advantageously is in full-surface contact with the side of the elastomer element (7, 7a) facing away from the medium side (6).

3. The shaft seal according to claim 1 or 2, **characterised in that** the elastomer element (7, 7a) rests under radial force on the sealing lip (4, 4a) of the sealing element (5, 5a) with a lip-shaped part (16, 16a) which advantageously is spring-loaded by at least one spring (17, 17a) in radial direction.

4. The shaft seal according to one of claims 1 to 3, **characterised in that** the supporting element (19, 19a) is in contact with the radially extending part of the sealing element (5, 5a) as well as at the transition from the radially extending part into the sealing lip (4, 4a).

5. The shaft seal according to one of claims 1 to 4, **characterised in that** two sealing elements (5, 5a) are provided axially adjacent to each other, which with one side are each in contact with a supporting element (19, 19a, 23).

6. The shaft seal according to claim 5, **characterised in that** the sealing elements (5, 5a) with their other side are in contact with an elastomer element (7, 7a).

7. The shaft seal according to one of claims 1 to 6, **characterised in that** the elastomer element (7, 7a) has a rotation-direction dependent or independent structure or geometry (25) relative to the sealing element (5, 5a).

8. The shaft seal according to one of claims 1 to 7, **characterised in that** the sealing lip (4, 4a) has a rotation-direction dependent or independent structure or geometry (26) .

9. The shaft seal according to claim 8, **characterised in that** the structure or geometry (26) is provided on the running side and/or the outer side of the sealing lip (4, 4a).

10. The shaft seal according to one of claims 1 to 9, **characterised in that** the shell surface (27) of the running sleeve (1) is profiled.

## Revendications

1. Joint détanchéité d'arbre, notamment joint d'arbre radial, avec au moins une chemise de roulement (1), un boîtier (9) ainsi qu'un élément d'étanchéité (5, 5a) en polyfluorocarbone, de préférence en polytétra-fluoroéthylène, lequel est doté d'une lèvre d'étanchéité (4, 4a) qui repose sous l'effet d'une force radiale contre une surface à étanchéifier et qui est contrainte par au moins un élément élastomère (7, 7a), lequel est disposé axialement entre une bride annulaire (8) orientée radialement vers l'intérieur du boîtier (9) et l'élément d'étanchéité (5, 5a), en direction vers la surface à étanchéifier (27), laquelle est la surface enveloppante (27) de la chemise de roulement (1) laquelle présente, sur une extrémité, une bride (2) orientée radialement vers l'extérieur et laquelle, dans un état monté, est assise en solidarité de rotation sur un arbre/axe, **caractérisé en ce que**, à l'état de montage, la chemise de roulement (1) est assise avec un ajustement forcé sur l'arbre/l'axe, que l'élément élastomère (7, 7a) repose contre la bride annulaire (8) orientée radialement vers l'intérieur du boîtier (9) et contre l'élément d'étanchéité (5, 5a), que l'élément d'étanchéité (5, 5a) repose, au niveau de son côté tournant le dos à l'élément élastomère (7, 7a), contre au moins un élément de support (19, 19a, 23) qui est un disque annulaire s'étendant radialement, lequel est fixé par soudage avec son bord extérieur radial à une partie cylindrique (10) du boîtier (9), et que la bride (2) de la chemise de roulement (1) se situe à l'extérieur du boîtier (9) et a une distance axiale par rapport à la bride annulaire (8) du boîtier (9).

2. Joint détanchéité d'arbre selon la revendication 1,
**caractérisé en ce que** l'élément élastomère (7, 7a) supporte l'élément d'étanchéité (5, 5a), lequel repose avantageusement à plat contre le côté de l'élément élastomère (7, 7a) tournant le dos au côté du milieu (6).

3. Joint détanchéité d'arbre selon la revendication 1 ou 2,
**caractérisé en ce que** l'élément élastomère (7, 7a) repose, avec une partie semblable à une lèvre (16, 16a) avantageusement contrainte par au moins un ressort (17, 17a) en direction radiale, sur la lèvre d'étanchéité (4, 4a) de l'élément d'étanchéité (5, 5a) sous l'effet d'une force radiale.

4. Joint détanchéité d'arbre selon l'une des revendications 1 à 3,
**caractérisé en ce que** l'élément de support (19, 19a) repose contre la partie s'étendant radialement de l'élément d'étanchéité (5, 5a) ainsi que contre la transition entre la partie s'étendant radialement et la lèvre d'étanchéité (4, 4a).

5. Joint détanchéité d'arbre selon l'une des revendications 1 à 4,
**caractérisé en ce que** deux éléments d'étanchéité (5, 5a) axialement côte à côte sont prévus, lesquels reposent avec un côté contre respectivement un élément de support (19, 19a, 23).

6. Joint détanchéité d'arbre selon la revendication 5,
**caractérisé en ce que** les éléments d'étanchéité (5, 5a) reposent avec leur autre côté contre un élément élastomère (7, 7a).

7. Joint détanchéité d'arbre selon l'une des revendications 1 à 6,
**caractérisé en ce que** l'élément élastomère (7, 7a) présente une structure ou géométrie (25) dépendante ou indépendante du sens de rotation par rapport à l'élément d'étanchéité (5, 5a).

8. Joint détanchéité d'arbre selon l'une des revendications 1 à 7,
**caractérisé en ce que** la lèvre d'étanchéité (4, 4a) présente une structure ou géométrie (26) dépendante ou indépendante du sens de rotation.

9. Joint détanchéité d'arbre selon la revendication 8,
**caractérisé en ce que** la structure ou géométrie (26) est prévue sur le côté de roulement et/ou le côté extérieur de la lèvre d'étanchéité (4, 4a).

10. Joint détanchéité d'arbre selon l'une des revendications 1 à 9,
**caractérisé en ce que** la surface enveloppante (27) de la chemise de roulement (1) est profilée.
